# EUROPÄISCHE PATENTSCHRIFT

(11) **EP 3 036 681 B1**
(45) Veröffentlichungstag und Bekanntmachung des Hinweises auf die Patenterteilung: **21.03.2018**
(21) Anmeldenummer: 14744799.9
(22) Anmeldetag: 17.07.2014
(51) Int. Cl.: G06F 21/75, G06F 21/76, G06F 21/85, G06F 13/364, G06F 13/42

(54) **VERFAHREN UND SCHALTUNGSANORDNUNG ZUR ABSICHERUNG GEGEN SCANNEN EINES ADRESSRAUMS**
METHOD AND INTEGRATED CIRCUIT PROTECTING AGAINST ADDRESS SPACE SCANNING
PROCÉDÉ ET ENSEMBLE DE CIRCUITS POUR LA PROTECTION CONTRE LE BALAYAGE D'UN ESPACE D'ADRESSES

(30) Priorität: 22.08.2013 DE 102013216699
(43) Veröffentlichungstag der Anmeldung: 29.06.2016
(73) Patentinhaber: Siemens AG Österreich, 1210 Wien (AT)
(72) Erfinder: EPPENSTEINER, Friedrich, A-3620 Spitz (AT); GHAMESHLU, Majid, A-1110 Wien (AT); TAUCHER, Herbert, A-2340 Mödling (AT)
(74) Vertreter: Maier, Daniel Oliver
(86) Internationale Anmeldenummer: PCT/EP2014/065391
(87) Internationale Veröffentlichungsnummer: WO 2015/024716

(56) Entgegenhaltungen:
- EP-A1- 1 619 572
- EP-A1- 2 472 408
- US-A1- 2005 229 254

## Beschreibung

### Technisches Gebiet

Die vorliegende Erfindung betrifft allgemein das Gebiet der der elektronischen und logischen Schaltungen, insbesondere der integrierten, elektronischen Schaltungen wie z.B. anwendungsspezifische integrierte Schaltungen (ASICs) oder Field Programmable Gate Arrays (FPGAs). Im Speziellen bezieht sich die vorliegende Erfindung auf ein Verfahren sowie eine Schaltungsanordnung zur Absicherung einer integrierten, elektronischen Schaltung wie z.B. von ASICs, FPGAs insbesondere in Form von Ein-Chip-Systemen, gegen ein Scannen eines Adressraums, wobei die integrierte, elektronische Schaltung zumindest eine Mastereinheit, zumindest eine Slave-Einheit und ein Bussystem für eine Verbindung zwischen Master- und Slave-Einheit aufweist. Zugriffe zwischen Master- und Slave-Einheit werden über das Bussystem mittels einer Adresse aus dem Adressraum durchgeführt, wobei je nach vorgesehenen Funktionalitäten der integrierten, elektronischen Schaltung der Adressraum belegt bzw. benutzt wird.

### Stand der Technik

Heutzutage bilden logische bzw. elektronische Schaltungen, welche häufig als so genannte integrierte, elektronische Schaltungen oder Integrated Circuits (ICs) realisiert sind, insbesondere in der Computertechnik eine Grundlage für jegliche Elektronik. Integrierte, elektronische Schaltungen bestehen dabei aus einer auf einem einzelnen Substrat, meist einem Halbleitersubstrat, untergebrachten elektronischen Schaltung aus miteinander verbundenen elektronischen Bauelementen. Eine integrierte, elektronische Schaltung weist meist eine große Anzahl an verschiedenartigen Bauelementen sowie verbindende Leiterzüge auf oder in einem Halbleitersubstrat bzw. einkristallinen Substrat - dem so genannten Chip - auf. Durch diese Integration wurde es möglich umfangreiche Anwendungen und Funktionalitäten auf einem kleinen Raum zur Verfügung zu stellen und technisch zu realisieren und damit die Schaltungen wesentlich zu verkleinern für eine Verwendung in z.B. mobilen Geräten, SIM-Karten, RFIDs, Smartphones und vielen weiteren elektrischen und/oder elektronischen Geräten.

Werden derartige integrierte, elektronische Schaltungen für spezielle Anwendungen erstellt, so werden diese als anwendungsspezifische, integrierte Schaltungen oder Applicationspecific integrated Circuits (ASICs) bezeichnet. Die Funktionalitäten eines ASICs werden bei Design, Entwicklung und Herstellung eindeutig festgelegt und sind damit fest vorgegeben bzw. sollten nicht mehr manipulierbar sein. Es gibt allerdings auch viele ASICs, in welchen Mikroprozessoren, Signalprozessoren, etc. integriert sind, wodurch durch darauf ablaufende Anwendungen in Form von Software eine gewisse Flexibilität erreicht werden kann.

Eine weitere Anwendungsform integrierter, elektronischer Schaltungen sind die so genannten Field Programmable Gate Arrays (FPGAs), in welchen eine logische Schaltung durch Definitionen von Funktionsstrukturen und durch Vorgabe von Strukturvorschriften programmiert werden kann. Dabei werden in einem FPGA Schaltungsstrukturen beispielsweise mittels einer Hardwarebeschreibungssprache oder in Form von Schaltplänen erstellt und dann diese Daten für eine Konfiguration des FPGA in den Baustein bzw. Chip geladen. Im Gegensatz zu ASICs können in einem FPGA durch diese Programmierung unterschiedliche Schaltungen realisiert werden - d.h. die Schaltung in einem FPGA ist beispielsweise auch durch einen Anwender änderbar bzw. implementierte Funktionalitäten können nachträglich verändert, verbessert oder erweitert werden. Mit Hilfe von FPGAs werden z.B. von einfachen Synchronzähler bis zu hochkomplexen Schaltungen wie z.B. Mikroprozessoren realisiert. Die Funktion des FPGAs wird damit durch die entsprechende in den Baustein geladene Konfiguration festgelegt.

Durch eine weitere Verkleinerung und einen ständig steigenden Integrationsgrad werden mittlerweile ganze Systeme mit beispielsweise Prozessoren, Controllern, Speicherbausteinen (z.B. ROMs, RAMs, etc.), Power-Management und weiteren Komponenten auf einem Chip oder Die untergebracht. Derartige Systeme werden auch als Ein-Chip-Systeme oder System-on-Chip (SoC) bezeichnet. Diese Ein-Chip-Systeme finden hauptsächlich in Bereichen Anwendung, in welchen kleine Abmessungen bei relativ hoher Leistung und vielfältige Funktionalitäten gefragt sind (z.B. Mobilfunkbereich, Smartphones, Embedded Computers, etc.). Bei einem System-on-Chip sind alle oder ein großer Teil der Funktionalitäten des Systems - z.B. in Form von Hardwarekomponenten (z.B. Bauteile, Prozessoreinheiten, Speichereinheiten, Peripherie-Einheiten, etc.) und/oder Software-komponenten (z.B. Software-Anwendungen, Programme, etc.) in einer integrierten, elektronischen Schaltung auf einem Chip untergebracht, wobei die Systemeinheiten über meist hierarchische oder zumindest segmentierte Bussysteme verbunden werden.

Für eine Organisation und Verteilung von Zugriffen und Aufgaben, etc. zwischen den funktionalen Einheiten bzw. Komponenten in komplexen, integrierten Schaltungen, insbesondere in einem System-on-Chip, wird häufig das so genannte Master-Slave-Konzept angewendet. Dabei werden die jeweiligen Aufgaben zwischen übergeordneten Komponente - den so genannten Mastereinheiten - wie z.B. Prozessoreinheiten, Controllereinheiten, etc. und untergeordneten Komponenten - den so genannten Slave-Einheiten (z.B. Speichereinheiten, Peripherieeinheiten, Spezialprozessoren, etc.) verteilt und eine Verwaltung von Zugriffen auf gemeinsame Ressourcen (z.B. Bussysteme, Speichereinheiten, etc.) geregelt. Ein Master-Slave-Konzept wird beispielsweise dann verwendet, wenn von einer oder mehreren Komponenten oder Mastereinheiten eine Steuerung von anderen Komponenten bzw. Slave-Einheiten übernommen wird oder Zugriffe z.B. auf das Bussystem oder Speichereinheiten geregelt werden müssen.

Bei integrierten, elektronischen Schaltungen wie z.B. ASICs, FPGAs, etc. und insbesondere Ein-Chip-Systemen besteht nicht selten eine große Abhängigkeit zwischen den zu verarbeitenden Daten, einer Belegung von Adressbereichen in einem Adressraum, über welche z.B. Zugriffe auf Speichereinheiten und damit auf Hardware- und/oder Software-Komponenten definiert werden, und den in der Schaltung implementierten Funktionalitäten und Anwendungen. Durch eine Kenntnis dieser Informationen (z.B. wo im Adressraum z.B. Daten oder Software-Komponente wie z.B. Programmcodes, etc. liegen, welche Adressbereich des Adressraums z.B. unbenutzt sind, etc.) können beispielsweise Rückschlüsse auf die Funktionalitäten und die Konfiguration der Schaltung gezogen werden und so z.B. gezielte Hacker-Attacken erstellt werden, um die Schaltung zu kompromittieren und/oder zu manipulieren, oder um an benötigte bzw. geschützte Daten zu gelangen.

Integrierte, elektronische Schaltungen können z.B. zwar so genannte Safety- und/oder Security-Funktionen als Software-Komponenten aufweisen, durch welche die jeweilige Schaltung beispielsweise vor unberechtigten Zugriffen, Manipulationen, etc. insbesondere im laufenden Betrieb geschützt wird. Diese Funktionen werden allerdings erst bei einem Startvorgang bzw. in einer Hochlauf-Phase der Schaltung für den laufenden Betrieb aktiviert. Die integrierte, elektronische Schaltung selbst als elektronischer Baustein verfügt üblicherweise nicht über Funktionalitäten, um die Schaltung vor Angriffen z.B. mit von außen auf den Baustein der Schaltung geladener Programme (z.B. Malware, etc.) oder vor einem Ausspähen bzw. Scannen des Adressraums (z.B. von in die Schaltung eingebetteter Prozessoren, des Adress-Mappings im Bussystem, etc.) zu schützen. Als Adressraum der Schaltung wird dabei eine Menge von Adressen für z.B. Zugriffe zwischen Komponenten der Schaltung (z.B. Mastereinheiten, Slave-Einheiten, etc.) bezeichnet, welche sich jede einheitlich und eindeutig ansprechen bzw. adressieren lassen. Eine Kenntnis von z.B. benutzten und unbenutzten Adressen im Adressraum einer Schaltung können damit für so genanntes Reverse-Engineering herangezogen werden. Beim Scannen des Adressraums einer Schaltung wird beispielsweise versucht, mit Hilfe von aufeinander folgenden Schreib- und/oder Lese-Zugriffen auf aufeinanderfolgende Adressen Rückschlüsse auf ein Innenleben - d.h. auf Konfiguration und Funktionalität - der Schaltung zu erhalten. Die aus dem Scann gewonnene Information z.B. über die Nutzung des Adressraums kann dann z.B. für gezielte Hacker-Attacken, für einen unberechtigten Nachbau der bestehenden Schaltung und/oder dazu genutzt werden, um an sensible Daten der Schaltung zu gelangen.

### Darstellung der Erfindung

Der Erfindung liegt daher die Aufgabe zugrunde, ein Verfahren sowie eine Schaltanordnung anzugeben, durch welche auf einfache Weise ein Scannen eines Adressraum einer integrierten, elektronischen Schaltung erschwert und ein Ableitung einer Struktur oder von Funktionalitäten der Schaltung aus einem Ergebnis des Adressraum-Scanns verhindert wird.

Diese Aufgabe wird durch ein Verfahren sowie durch eine Schaltanordnung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem eine Verteidigungs-Slave-Einheit in der integrierten, elektronischen Schaltung vorgesehen und an das Bussystem der Schaltung angeschlossen wird. Zugriffe auf unbenutzte Adressen und/oder Adressbereiche des Adressraums der Schaltung bzw. ihrer Mastereinheiten werden an die Verteidigungs-Slave-Einheit weitergeleitet. Diese Zugriffe werden dann von der Verteidigungs-Slave-Einheit analysiert und ausgewertet und in Abhängigkeit von einem Analyseergebnis und einer Zugriffsart (z.B. Lese-Zugriff, Schreib-Zugriff, etc.) des jeweiligen unberechtigten Zugriffs von der Verteidigungs-Slave-Einheit entsprechende Abwehrmaßnahmen ausgelöst.

Der Hauptaspekt der erfindungsgemäß vorgeschlagenen Lösung besteht darin, dass Zugriffe auf nicht genutzte Adressen bzw. Adressbereiche nicht im Bussystem der Schaltung und mit einer Fehlermeldung beendet werden, sondern auf eine an das Bussystem angeschlossene Verteidigungs-Slave-Einheit. Die Zugriffe können damit entsprechend analysiert und ausgewertet werden. Da von Software-Komponenten bzw. von einer Produktsoftware der integrierten, elektronischen Schaltung üblicherweise nicht auf unbenutzte Adressen oder Adressbereiche zugegriffen wird, können damit auf einfache Weise und rasch Scanns des Adressraums erkannt werden - z.B. durch eine hohe Anzahl von Zugriffen auf unbenutzte Adressbereich in einer relativ kurzen Zeit oder durch bestimmte Muster bei Schreib-Zugriffen (z.B. zu schreibenden Daten werden inkrementiert). Weiterhin können dann rasch entsprechende Abwehrmaßnahmen gegen den Scann des Adressraums ausgelöst und damit ein Ausspähen der Funktionalität der Schaltung verhindert werden. Dabei zielen die Abwehrmaßnahmen darauf ab, ein Hacken der integrierten, elektronischen Schaltung zu erschweren. Durch den Adressraum-Scann entweder keine, keine auswertbaren oder verfälschte Informationen, auf welchen die Funktionalität der Schaltung nicht oder nicht mehr ermittelbar ist, geliefert werden.

Dabei ist es vorteilhaft, wenn für eine Analyse der Zugriffe auf unbenutzte Adressen bzw. Adressbereiche durch die Verteidigungs-Slave-Einheit eine Anzahl von Zugriffen auf unbenutzte Adressen, eine Anzahl der Zugriffe innerhalb eines vorgegebenen Zeitraums und/oder Muster von Zugriffen ausgewertet werden. Auf diese Weise können z.B. sehr einfach fehlerhafte Zugriffe auf unbenutzte Adressen aufgrund eines Software-Fehlers - z.B. einer oder nur sehr wenige Zugriffe - von einen echten Scannen des Adressraums - d.h. z.B. systematische Zugriffesabfolgen von Lese- und/oder Schreibzugriffen auf aufeinanderfolgende Adressen mit einer großen Anzahl an Zugriffen - unterschieden werden. Auch anhand der Anzahl der Zugriffe auf unbenutzte Adressen innerhalb eines vorgegebenen Zeitintervalls können sehr leicht und rasch Adressraum-Scanns erkannt werden. Weiterhin können Adressraum-Scanns auch durch bestimmte Muster bei den Zugriffen identifiziert werden. Durch die Auswertung der Zugriffe durch die Verteidigungs-Slave-Einheit werden die Abwehrmaßnahmen nur bei einem Adressraum-Scann, aber z.B. nicht bei Zugriffen aufgrund von Software-Fehlern ausgelöst.

Bei einem Startvorgang bzw. in einer Hochlauf-Phase der integrierten, elektronischen Schaltung ist es günstig, wenn auf Basis des Analyseergebnisses bzw. bei Erkennen eines Adressraum-Scanns in dieser Phase als Abwehrmaßnahme die integrierte, elektronische Schaltung wieder in einen definierten Ausgangszustand gebracht wird. D.h. es wird z.B. durch einen Meldung der Verteidigungs-Slave-Einheit bzw. durch die Verteidungs-Slave-Einheit ein so genannter Reset der integrierten, elektronischen Schaltung ausgelöst, durch welchen die Schaltung wieder zurückgesetzt und damit der Adressraum-Scann bzw. ein ihn ausführendes unzulässiges Programm (z.B. Malware, manipulierte Software, etc.) beendet wird. Diese Abwehrmaßnahme kann beispielsweise nur in der Hochlauf-Phase der integrierten Schaltung aktiviert sein und nach einem erfolgreichen Hochlaufen ohne unzulässigen Angriff deaktiviert werden, damit gegebenenfalls durch in der Produktsoftware der Schaltung beinhaltete Zugriffe diese Maßnahme bzw. der Reset der Schaltung nicht versehentlich ausgelöst wird.

Bei einem laufenden Betrieb der integrierten, elektronischen Schaltung empfiehlt es sich, dass auf Basis des Analyseergebnisses bzw. bei Erkennen eines Adressraum-Scanns als Abwehrmaßnahmen von der Verteidigungs-Slave-Einheit Meldungen an Master- und/oder Slave-Einheiten in Form von Unterbrechungsanforderungen - so genannte Interrupt-Anforderungen - oder spezifische für die jeweilige Anwendung, Funktionalität bzw. Produktsoftware erkennbare Zurücksetzungs- oder Resetanforderungen gesendet werden. Durch die Interrupt-Anforderung kann z.B. eine gerade laufende Software-Komponente der Schaltung (z.B. ein Programm für oder mit dem Adressraum-Scann) unterbrochen werden, um eine vordefinierte so genannte Interrupt-Routine z.B. zum Stören des Adressraum-Scanns durchzuführen. Durch die spezifische Reset-Anforderung kann beispielsweise ein laufende Software-Komponente und damit der Adressraum-Scann zurückgesetzt und beendet werden. Es ist aber auch möglich, dass bei Erkennen eines Adressraum-Scanns festgelegte (z.B. besonders schützenswerte oder sensible) Funktionalitäten der Schaltung z.B. durch eine Meldung der Verteidungungs-Slave-Einheit deaktiviert werden.

Weiterhin ist es vorteilhaft, wenn als Abwehrmaßnahme Zugriffe auf unbenutzte Adressen in Abhängigkeit von der jeweiligen Zugriffsart (z.B. Lese-Zugriff, Schreib-Zugriff) von der Verteidigungs-Slave-Einheit erwidert werden. Dabei können Lese-Zugriffe auf unbenutzte Adressen von der Verteidigungs-Slave-Einheit mit zufällig erzeugten Daten beantwortet werden. Daten von Schreib-Zugriffe werden beispielsweise ignoriert oder diese Daten werden genutzt, um nachfolgende Lese-Zugriffe auf unbenutzte Adressen zu erwidern. Es kann auch bei Zugriffen auf unbenutzte Adressen z.B. eine virtuelles, in der Schaltung nicht existierende Schnittstelle wie z.B. RAM oder Universal Asynchronous Receiver Transmitter, kurz UART, welcher in einer elektronischen Schaltung für eine Realisierung von digitalen seriellen Schnittstellen genutzt wird, vorgetäuscht werden. Beim Vortäuschen eines UARTs können zusätzlich z.B. Register einer UART-Funktionseinheit in den unbenutzten Adressbereich eingeblendet und zurückgeliefert werden, und damit eine falsche Funktionalität der Schaltung vorgetäuscht werden. Weiterhin können bei Lese- und/oder Schreibzugriffen sensible Daten wie z.B. Start-Sequenzen in einer Speichereinheit bzw. in einem Speicherbereich der Schaltung gelöscht werden, wodurch die integrierte Schaltung permanent in einen inaktiven Zustand versetzt wird.

Durch ein Beantworten der Zugriffe mit zufälligen oder falschen Daten oder Vortäuschen nicht vorhandener Funktionalitäten kann aus dem Adressraum-Scann keine oder keine auswertbare Information über die Konfiguration und Funktionalitäten der ausgespähten Schaltung mehr gewonnen werden. Es ist dadurch nicht mehr nachvollziehbar, welche Adressbereiche des Adressraums unbenutzt bzw. wie genutzt werden. Damit werden Hacker-Angriffe auf die integrierte Schaltung wesentlich erschwert bzw. ein Reverse-Engineering auf Basis eines Adressraum-Scanns unmöglich gemacht.

Weiterhin wird die Aufgabe mit einer Schaltanordnung zur Durchführung des erfindungsgemäßen Verfahrens gelöst. Diese Schaltanordnung umfasst neben zumindest einer Mastereinheit, zumindest einer Slave-Einheit und einem Bussystem für eine Verbindung zwischen der zumindest einen Mastereinheit und der zumindest einen Slave-Einheit eine Verteidigungs-Slave-Einheit, welche an das Bussystem angebunden ist, und an welche Zugriffe auf unbenutzte Adressen bzw. Adressbereiche des Adressraums weiterleitbar sind. Die Verteidigungs-Slave-Einheit ist weiterhin dazu eingerichtet, die Zugriffe auf unbenutzte Adressen bzw. Adressbereich zu analysieren und auszuwerten und entsprechend eines jeweiligen Analyseergebnisses und in Abhängigkeit von einer Zugriffsart (z.B. Lese-Zugriff, Schreib-Zugriff) Abwehrmaßnahmen zu veranlassen und auszulösen.

Die mit der erfindungsgemäßen Schaltungsanordnung erzielten Vorteile liegen vor allem darin, dass auf einfache und rasche Weise Addressraum-Scanns erkannt und entsprechende Gegen- bzw. Abwehrmaßnahmen gesetzt werden können, durch welche ein Adressraum-Scann erschwert und behindert wird bzw. durch welche eventuell auf Basis des Adressraum-Scanns ermittelte Informationen über die integrierte, elektronische Schaltung wertlos werden. Durch die Erweiterung der Schaltung mit einer Verteidigungs-Slave-Einheit bei der erfindungsgemäßen Schaltungsanordnung werden Zugriffe auf unbenutzte Adressen bzw. Adressbereiche nicht mehr im Bussystem z.B. mittels einer Unterbrechungsanforderung an die zugreifende Komponente beendet, sondern diese Zugriffe werden an die Verteidigungs-Slave-Einheit weitergeleitet. Dort erfolgt dann einen Analyse und Auswertung der Zugriffe auf die unbenutzten Adressen, wodurch sehr rasch ein Adressraum-Scann z.B. aufgrund von häufigen und systematischen Zugriffen auf unbenutzte Adressen festgestellt werden kann. Dazu können die Anzahl dieser Zugriffe, die Anzahl dieser Zugriffe innerhalb eines bestimmten Zeitintervalls oder Muster bei diesen Zugriffen wie z.B. ein Inkrementieren von Daten bei aufeinanderfolgenden schreibenden Zugriffen analysiert und ausgewertet werden. Die Verteidigungs-Slave-Einheit ist dann dazu eingerichtet, bei Erkennen eines Adressraum-Scanns entsprechende Abwehrmaßnahmen auszulösen.

Dazu ist es von Vorteil, wenn die Verteidigungs-Slave-Einheit zum Versenden von Meldungen in Form von Unterbrechungsanforderungen oder spezifischen Reset-Anforderungen oder zum Deaktivieren von Funktionalitäten als Abwehrmaßnahmen eingerichtet ist. Weiterhin ist die Verteidigungs-Slave-Einrichtung dazu vorgesehen, die integrierte, elektronische Schaltung in einen definierten Anfangszustand als Abwehrmaßnahme zurückzusetzen, wenn bei einem Startvorgang bzw. einer Hochlauf-Phase ein Adressraum-Scann identifiziert wird. Dadurch werden z.B. Software-Komponenten, welche beispielsweise ein Scann-Programm enthalten können, sowohl im laufenden Betrieb der integrierten Schaltung als auch beim Hochlaufen der integrierten Schaltung unterbrochen bzw. abgebrochen. Ein Adressraum-Scann wird damit beendet und die dadurch erhaltenen Informationen über z.B. unbenutzte Adressen und/oder Adressbereiche sind unvollständig.

Weiterhin ist es auch günstig, wenn die Verteidigungs-Slave-Einheit Mittel zum Beantworten von Zugriffen in Abhängigkeit der jeweiligen Zugriffsart (z.B. Lese-Zugriff, Schreib-Zugriff) aufweist oder bei Zugriffen auf unbenutzte Adressen bzw. Adressbereiche des Adressraums dazu eingerichtet ist, virtuelle Schnittstellen vorzutäuschen. Von der Verteidigungs-Slave-Einheit kann z.B. ein Zurücksenden von zufällig erzeugten Daten bei einem Lese-Zugriff auf eine unbenutzte Adresse veranlasst werden. Bei Schreib-Zugriffen auf unbenutzte Adressen werden z.B. die zu schreibenden Daten ignoriert oder für eine Beantwortung des nächsten Lese-Zugriffs z.B. in inkrementierter Form genutzt. Es besteht auch die Möglichkeit als Beantwortung von Zugriffen auf unbenutzte Adressen oder Adressbereich eine virtuelle Schnittstelle (z.B. RAM, UART, etc.) vorzutäuschen, welche für diese Adressen bzw. für diesen Adressbereich eingeblendet wird. Durch derartige Maßnahmen wird auf einfache Weise die mittels Adressraum-Scann erhaltbare Information verfälscht und damit für z.B. Reverse Engineerung und Hacker-Angriffe wertlos gemacht, da nicht mehr erkennbar ist, welche Adressen bzw. Adressbereiche in der integrierten, elektronischen Schaltung tatsächlich unbenutzt sind.

Weiterhin gibt es noch die Möglichkeit, dass bei Lese- und/oder Schreibzugriffen auf unbenutzte Adressen und einem erkannten Adressraum-Scann gezielt ein Löschen von sensiblen Daten durch die Verteidigungs-Slave-Einheit veranlasst wird. Die integrierte Schaltung kann damit in einen permanent inaktiven Zustand versetzt werden - z.B. durch ein Zerstören einer Boot-Sequence in der entsprechenden Speichereinheit. Diese Vorgehensweise kann z.B. bei besonders sensiblen Schaltungen als Schutz vor Reverse Engineering eingesetzt werden, damit mittels Adressraum-Scanns keine Informationen über die Schaltung gewonnen werden können.

Idealerweise ist als Bussystem bei der erfindungsgemäßen Schaltungsanordnung ein so genanntes Network-on-Chip-Bussystem in Verwendung. Bei einem Network-on-Chip-Bussystem werden die Informationen und Daten zwischen den einzelnen Komponenten der integrierten Schaltung (z.B. Prozessoren, Controller-Einheiten, Peripherie-Einheiten, Speichereinheiten, etc.) über eine geschichtete Busarchitektur ausgetauscht. Ein Network-on-Chip-Bussystem ist dabei wie Netzwerk mit Verteilerstellen aufgebaut. Die Informationen bzw. Zugriffe von einer Komponente auf eine andere Komponente der Schaltung können dabei als Punkt-zu-Punkt- oder als Mehrwegverbindung über mehrere Links geschaltet werden und wie z.B. ein Routing in einem paketvermittelten Netzwerk funktionieren. Ein Network-on-Chip-Bussystem stellt damit einen Ansatz dar, um flexible und effiziente Kommunikationsverbindungen innerhalb einer integrierten Schaltung, insbesondere innerhalb eines Ein-Chip-Systems, zu entwickeln und zu realisieren. Eine Informationsübertragung bzw. Zugriffe können über ein Network-on-Chip-System rascher und effizienter ausgeführt werden. Damit werden auch unberechtigte Zugriffe auf unbenutzte Adressen bzw. Adressbereiche rascher zur Verteidigungs-Slave-Einheit geleitet und ein Adressraum-Scann rascher erkannt.

### Kurzbeschreibung der Zeichnung

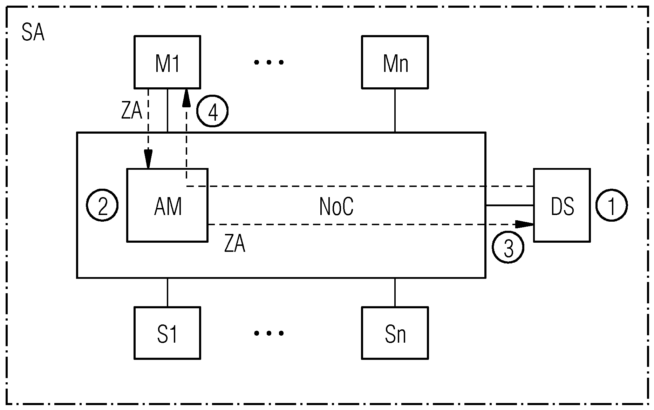

Die Erfindung wird nachfolgend in beispielhafter Weise anhand der beigefügten Figur erläutert. Figur 1 zeigt dabei in beispielhafter und schematischer Weise eine Schaltanordnung zur Durchführung eines Verfahrens zur Absicherung einer integrierten, elektronischen Schaltung gegen Scannen eines Adressraums sowie einen Ablauf des erfindungsgemäßen Verfahrens.

### Ausführung der Erfindung

Figur 1 zeigt in schematischer und beispielhafter Weise eine Schaltanordnung SA zur Durchführung des erfindungsgemäßen Verfahrens zur Absicherung einer integrierten, elektronischen Schaltung gegen Scannen eines Adressraums dieser Schaltung. Die erfindungsgemäße Schaltungsanordnung umfasst dabei zumindest einen Mastereinheit M1 bis Mn wie z.B. Prozessoren, Controller, Spezialprozessoren, etc. sowie zumindest eine Slave-Einheit S1 bis Sn wie z.B. Speichereinheiten, Peripherieeinheiten, etc. Weiterhin weist die erfindungsgemäße Schaltungsanordnung SA ein Bussystem NoC auf, welches beispielsweise eine am Markt erhältliche Standard-Lösung für Bussysteme, insbesondere ein so genanntes Network-on-Chip-Bussystem ist.

Über das Bussystem NoC sind die zumindest eine Mastereinheit M1 bis Mn mit der zumindest einen Slave-Einheit S1 bis Sn verbunden. Die beispielhaft in Figur 1 dargestellte Schaltungsanordnung SA weist dabei mehrere Mastereinheiten M1 bis Mn sowie mehrere Slave-Einheiten S1 bis Sn auf. An dieses Bussystem NoC ist weiterhin eine Verteidigungs-Slave-Einheit DS angeschlossen.

Bei der Ausführung von Anwendungen und Funktionalitäten bzw. beim Ablauf von Software-Komponenten (z.B. Produkt-Software) der integrierten, elektronischen Schaltung werden von einer Mastereinheit M1 bis Mn Zugriffe ZA über das Bussystem NoC auf eine oder mehrere Slave-Einheiten S1 bis Sn anhand von Adressen durchgeführt bzw. von Slave-Einheiten S1 bis Sn Informationen und/oder Daten, Meldungen, etc. an die jeweilige Mastereinheiten M1 bis Mn über das Bussystem NoC mittels Adressen zurückgeliefert. Im Bussystem NoC wird dabei ein so genanntes Adressen-Mapping AM durchgeführt, von welchem beispielsweise bei einem Zugriff eine Adresse einer Mastereinheit M1 bis Mn auf die Adresse der jeweiligen Slave-Einheit S1 bis Sn innerhalb des Adressraums umgesetzt wird.

Eine Menge von Adressen, über welche beispielsweise andere Einheiten M1 bis Mn, S1 bis Sn der integrierten, elektronischen Schaltung eindeutig angesprochen sowie Speichereinheiten verwaltet werden können, bildet dabei den Adressraum dieser Schaltung. Dabei wird der Adressraum in Abhängigkeit von den Funktionalitäten der integrierten, elektronischen Schaltung genutzt - d.h. es gibt belegte und unbelegte Adressen bzw. Adressbereiche. Wird nun z.B. aufgrund eines Fehlers in einer Anwendung oder Funktionalität der integrierten, elektronischen Schaltung auf eine nicht benutzte Adresse zugegriffen, so wird dieser Zugriff ZA üblicherweise im Bussystem NoC durch eine Unterbrechungsanforderung - einen so genannten Interrupt - der jeweilige Anwendung bzw. Funktionalität mitgeteilt.

Bei der erfindungsgemäßen Schaltungsanordnung SA ist allerdings die Verteidigungs-Slave-Einheit DS vorgesehen, an welche Zugriffe ZA auf nicht benutzte Adressen bzw. Adressbereiche über das Bussystem NoC mittels dem Adressen-Mappings AM weiterleitbar sind. Von der Verteidigungs-Slave-Einheit DS werden diese Zugriffe ZA dann analysiert und ausgewertet, um auf diese Weise z.B. systematische oder gehäuft auftretende Zugriffe ZA auf unbenutzte Adressen zu identifizieren und damit einen so genannten Adressraum-Scann zu erkennen. Dazu können beispielsweise eine Anzahl der Zugriffe ZA auf unbenutzte Adressen, eine Anzahl der Zugriffe ZA innerhalb eines vorgegebenen Zeitraums oder Muster von Zugriffen ZA (z.B. bei Schreib-Zugriffen) ausgewertet werden.

Bei einem Adressraum-Scann wird beispielsweise von einem in die Schaltung geladenen Schadprogramm oder Malware durch aufeinanderfolgende Lese- und/oder Schreibzugriffe auf aufeinanderfolgende Adressen der integrierten Schaltung der Adressraum abgetastet, um z.B. unbenutzte Bereiche, Bereiche mit Programmcode, Bereiche mit Daten, etc. zu identifizieren und diese Information z.B. für ein so genanntes Reverse Engineering und/oder Hacker-Attacken zu nutzen. Das bedeutet, es werden bei einem Adressraum-Scann viele Zugriffe ZA auf unbenutzte Adressen z.B. systematisch und meist innerhalb eines kurzen Zeitraums durchgeführt. Häufig werden z.B. bei Schreib-Zugriffen bestimmte Muster (z.B. Schreibdaten werden inkrementiert) genutzt. Daran kann die Verteidigungs-Slave-Einheit dann einen Adressraum-Scann erkennen und z.B. von einem Zugriff ZA auf einen unbenutzte Adresse durch einen Softwarefehler unterscheiden. Werden Adressraum-Scanns von der Verteidigungs-Slave-Einheit DS erkannt, so ist die Verteidigungs-Slave-Einheit DS dazu eingerichtet, Abwehrmaßnahmen auszulösen bzw. Zugriffe auf unbenutzte Adressen zu behandeln und zu erwidern.

Für die Durchführung des erfindungsgemäßen Verfahrens zur Absicherung einer integrierten, elektronischen Schaltung gegen ein Scannen des Adressraums wird in einem ersten Verfahrensschritt 1 die Verteidigungs-Slave-Einheit DS an das Bussystem NoC der Schaltung angeschlossen. Ist nun z.B. auf eine ersten Mastereinheit M1 eine Schadprogramm geladen worden, von welchem der Adressraum der integrierten Schaltung gescannt und über Zugriffe ZA systematisch auf unbenutzte Adressen bzw. Adressbereiche zugegriffen wird, so werden in einem zweiten Verfahrensschritt 2 durch das Adressen-Mapping AM des Bussystems NoC die Zugriffe ZA auf unbenutzte Adressen bzw. Adressbereiche an die Verteidigungs-Slave-Einheit DS weitergeleitet.

In einem dritten Verfahrensschritt 3 werden dann von der Verteidigungs-Slave-Einheit DS die Zugriffe ZA analysiert und ausgewertet, um einen Adressraum-Scann zu erkennen und von singulären fehlerhaften Zugriffen ZA auf unbenutzte Adressen zu unterscheiden. Dabei können die Zugriffe ZA von der Verteidigungs-Slave-Einheit DS nach Kriterien wie z.B. Anzahl der Zugriffe ZA oder Anzahl von Zugriffen ZA innerhalb eines vorgegebenen Zeitintervalls ausgewertet werden. Es kann auch untersucht werden, ob bestimmte Muster bei den Zugriffen ZA erkennbar sind - wie z.B. systematische Schreib-Zugriffe auf unbenutzte Adressen mit inkrementierten Schreibdaten, etc.

Wird im dritten Verfahrensschritt 3 ein Adressraum-Scann identifiziert, so können in einem vierten Verfahrensschritt 4 von der Verteidigungs-Slave-Einheit verschiedene Abwehrmaßnahmen ausgelöst oder durchgeführt werden, um beispielsweise den Adressraum-Scann zu terminieren, zu behindern oder die damit gewonnenen Informationen wertlos zu machen. Dabei kann z.B. bei einem Startvorgang bzw. bei einem Hochlaufen der Schaltung von der Verteidigungs-Slave-Einheit DS ein so genannter Reset der Schaltung ausgelöst werden. D.h. die integrierte Schaltung wird dabei in einen definierten Anfangszustand zurückversetzt und alle laufenden Anwendungen, Funktionalitäten, Programme, etc. beendet. Dabei ist es allerdings denkbar, dass diese Abwehrmaßnahme für einen laufenden Betriebe der integrierten Schaltung, wenn z.B. andere in der Schaltung implementierte Verteidigungs-Mechanismen aktiviert sind, abgeschaltet wird, damit durch Zugriffe von in der Schaltung ordnungsgemäß implementieren Programmen, Anwendungen, Funktionalitäten, etc. nicht unbeabsichtigt eine Reset der gesamten Schaltung ausgelöst wird.

Im laufenden Betrieb der Schaltung kann beispielsweise bei Erkennen eines Adressraum-Scanns im dritten Verfahrensschritt 3 von der Verteidigungs-Slave-Einheit DS im vierten Verfahrensschritt 4 einen Meldung in Form einer Unterbrechungsanforderung oder einer spezifischen Reset-Anforderung an die erste Mastereinheit M1 bzw. an das darauflaufende Schadprogramm gesendet werden. Das Schadprogramm wird dadurch beispielsweise unterbrochen oder abgebrochen. Es besteht aber auch die Möglichkeit, dass im vierten Verfahrensschritt 4 - ausgelöst durch die Verteidigungs-Slave-Einheit DS - gezielt festgelegte Funktionalitäten der integrierten Schaltung deaktiviert werden.

Weiterhin kann die Verteidigungs-Slave-Einheit DS im vierten Verfahrensschritt 4 bei einem erkannten Adressraum-Scann die Zugriffe ZA auf unbenutzte Adressen beispielsweise in Abhängigkeit einer Zugriffsart (z.B. Lese-Zugriff, Schreib-Zugriff) erwidern oder bearbeiten. So können beispielweise bei Lese-Zugriffen ZA zufällige Daten, welche z.B. mittels eines linearen rückgekoppelten Schieberegisters erzeugt worden sind, zurückgeliefert werden. Ein lineares rückgekoppeltes Schieberegister kann üblicherweise zur Erzeugung von streng deterministischen Pseudozufallszahlenfolgen eingesetzt werden. Schreib-Zugriffe ZA auf unbenutzte Adressen können z.B. ignoriert werden. Es besteht aber die Möglichkeit, dass die Daten solcher Schreib-Zugriffe ZA bei nachfolgenden Lese-Zugriffen auf unbenutzte Adressen in z.B. durch Inkrementieren veränderter Form zurückgeliefert werden.

Weiterhin kann im vierten Verfahrensschritt 4 als Abwehrmaßnahme bei Zugriffen ZA auf unbenutzte Adressen bzw. Adressbereiche eine virtuelle Schnittstelle wie z.B. ein RAM oder Direktzugriffsspeicher oder ein Universal Asynchronous Receiver Transmitter (UART), welcher zur Realisierung von digitalen seriellen Schnittstellen dient, vorgetäuscht werden. Beim Vortäuschen eines UARTs können beispielsweise Register von elektronischen Schaltungen bzw. vorgefertigten Bauteilen bzw. Bauteilelementen wie z.B. dem ARM-PL011-UART in den unbenutzten Adressbereich eingeblendet werden. Durch diese Abwehrmaßnahmen, welche auch mit den anderen Abwehrmaßnahmen wie einem Auslösen eines Interrupts oder eines spezifischen Resets kombiniert werden können, wird die Information des Adressraum-Scanns auf einfache Weise verfälscht und damit wertlos gemacht, da unbenutzte Adressen bzw. Adressbereich des Adressraums nicht mehr erkennbar sind.

Zusätzlich ist es auch denkbar, dass bei einem erkannten Adressraum-Scann im vierten Verfahrensschritt 4 die integrierte, elektronische Schaltung in einen permanenten inaktiven Zustand versetzt wird. Dazu werden z.B. sensible Daten (z.B. Boot-Sequenzen in einem Speicherbereich der Schaltung) gelöscht. Die Schaltung kann dann nicht mehr hochgefahren und z.B. gehackt werden. Diese Abwehrmaßnahme kann beispielsweise bei besonders sensiblen Schaltungen angewendet werden, deren Aufbau und Konfiguration einem besonderen Schutz unterliegt.

## Patentansprüche

1. Verfahren zur Absicherung einer integrierten, elektronischen Schaltung mit zumindest einer Mastereinheit (Ml bis Mn), zumindest einer Slave-Einheit (S1 bis Sn) und einem Bussystem (NoC) gegen ein Scannen eines Adressraum, wobei Zugriffe (ZA) der zumindest einen Mastereinheit (M1 bis Mn) auf die zumindest eine Slave-Einheit (S1 bis Sn) über das Bussystem (NoC) mittels einer Adresse aus dem Adressraum durchgeführt werden, und wobei der Adressraum in Abhängigkeit von den Funktionalitäten der integrierten, elektronischen Schaltung genutzt wird, **dadurch gekennzeichnet, dass** eine Verteidigungs-Slave-Einheit (DS) an das Bussystem (NoC) der integrierten, elektronischen Schaltung angeschlossen wird (1), dass Zugriffe (ZA) auf unbenutzte Adressen des Adressraums an die Verteidigungs-Slave-Einheit (DS) weitergeleitet werden (2), dass diese Zugriffe (ZA) von der Verteidigungs-Slave-Einheit (DS) analysiert und ausgewertet werden (3), und dass dann in Abhängigkeit von einem Analyseergebnis und einer Zugriffsart von der Verteidigungs-Slave-Einheit (DS) Abwehrmaßnahmen ausgelöst werden (4).

2. Verfahren nach Anspruch 1, **dadurch gekennzeichnet, dass** für eine Analyse der Zugriffe (ZA) durch die Verteidigungs-Slave-Einheit (DS) eine Anzahl der Zugriffe auf unbenutzte Adressen, eine Anzahl von Zugriffen innerhalb eines vorgegebenen Zeitraums und/oder Muster von Zugriffen (ZA) ausgewertet werden (3).

3. Verfahren nach einem der Ansprüche 1 bis 2, **dadurch gekennzeichnet, dass** bei einem Startvorgang auf Basis des Analyseergebnisses von der Verteidigungs-Slave-Einheit (DS) als Abwehrmaßnahme die integrierte, elektronische Schaltung wieder in einen definierten Anfangszustand gebracht wird (4).

4. Verfahren nach einem der Ansprüche 1 bis 2, **dadurch gekennzeichnet, dass** bei einem laufenden Betrieb auf Basis des Analyseergebnisses von der Verteidigungs-Slave-Einheit (DS) als Abwehrmaßnahmen Meldungen in Form von Unterbrechungsanforderungen oder spezifischen Reset-Anforderungen an Master- und/oder Slave-Einheiten (Ml bis Mn, S1 bis Sn) der integrierten, elektronischen Schaltung gesendet werden (4) oder festgelegte Funktionalitäten der integrierten, elektronischen Schaltung deaktiviert werden (4) .

5. Verfahren nach einem der Ansprüche 1 bis 4, **dadurch gekennzeichnet, dass** als Abwehrmaßnahme Zugriffe (ZA) in Abhängigkeit der jeweiligen Zugriffsart von der Verteidigungs-Slave-Einheit (DS) erwidert werden (4).

6. Schaltungsanordnung (SA) zur Absicherung einer integrierten, elektronischen Schaltung gegen Scannen eines Adressraums zur Durchführung des erfindungsgemäßen Verfahrens nach den Ansprüchen 1 bis 5, bestehend aus zumindest einer Mastereinheit (M1 bis Mn), zumindest einer Slave-Einheit (S1 bis Sn) und einem Bussystem (NoC) für eine Verbindung der zumindest einen Mastereinheit (Ml bis Mn) und der zumindest einen Slave-Einheit (S1 bis Sn) **dadurch gekennzeichnet, dass** weiterhin eine Verteidigungs-Slave-Einheit (DS) an das Bussystem (NoC) angeschlossen ist, an welche Zugriffe (ZA) auf unbenutzte Adressbereich des Adressraums weiterleitbar sind, und welche für einen Analyse und Auswertung der Zugriffe (ZA) sowie für ein Auslösen von Abwehrmaßnahmen in Abhängigkeit von einem Analyseergebnis und einer Zugriffsart eingerichtet ist.

7. Schaltungsanordnung nach Anspruch 6, **dadurch gekennzeichnet, dass** die Verteidigungs-Slave-Einheit (DS) zum Versenden von Meldungen in Form von Unterbrechungsanforderungen oder spezifischen Reset-Anforderungen oder zum Deaktivieren von festgelegten Funktionalitäten der integrierten, elektronischen Schaltung sowie zum Zurücksetzen der integrierte, elektronische Schaltung in einen definierten Anfangszustand als Abwehrmaßnahmen eingerichtet ist.

8. Schaltungsanordnung nach einem der Ansprüche 6 bis 7, **dadurch gekennzeichnet, dass** die Verteidigungs-Slave-Einheit (DS) zum Erwidern von Zugriffen (ZA) in Abhängigkeit der jeweiligen Zugriffsart eingerichtet ist.

9. Schaltungsanordnung nach einem der Ansprüche 6 bis 8, **dadurch gekennzeichnet, dass** als Bussystem (NoC) ein so genanntes Network-on-Chip-Bussystem eingesetzt ist.

## Claims

1. Method for protecting an integrated electronic circuit, which comprises at least one master device (M1 to Mn), at least one slave device (S1 to Sn) and a bus system (NoC), against scanning of an address space, wherein accesses (ZA) from the at least one master device (M1 to Mn) to the at least one slave device (S1 to Sn) are made via the bus system (NoC) using an address from the address space, and wherein the address space is used according to the functions of the integrated electronic circuit, **characterised in that** a defence slave device (DS) is connected (1) to the bus system (NoC) of the integrated electronic circuit, that accesses (ZA) to unused addresses of the address space are routed (2) to the defence slave device (DS), that these accesses (ZA) are analysed and evaluated (3) by the defence slave device (DS), and that then the defence slave device (DS) initiates (4) defensive measures according to an analysis result and to a type of access.

2. Method according to claim 1, **characterised in that** for an analysis of the accesses (ZA), the defence slave device (DS) evaluates (3) a number of accesses to unused addresses, a number of accesses within a defined time period and/or evaluates patterns of accesses (ZA).

3. Method according to one of claims 1 to 2, **characterised in that** during a start-up procedure, on the basis of the analysis result, the defence slave device (DS) returns (4) the integrated electronic circuit to a defined initial state as a defensive measure.

4. Method according to one of claims 1 to 2, **characterised in that** during operation, based on the analysis result, as defensive measures the defence slave device (DS) sends messages in the form of interrupt requests or specific reset (4) requests to master and/or slave devices (M1 to Mn, S1 to Sn) of the integrated electronic circuit or disables (4) specific functions of the integrated electronic circuit.

5. Method according to one of claims 1 to 4, **characterised in that** as a defensive measure, the defence slave device (DS) responds (4) to accesses (ZA) according to the particular type of access.

6. Circuit arrangement (SA) for protecting an integrated electronic circuit against scanning of an address space and for implementing the method according to the invention according to claims 1 to 5, consisting of at least one master device (M1 to Mn), at least one slave device (S1 to Sn) and a bus system (NoC) for a connection of the at least one master device (M1 to Mn) and the at least one slave device (S1 to Sn), **characterised in that** in addition, a defence slave device (DS) is connected to the bus system (NoC), to which can be routed accesses (ZA) to unused address areas of the address space, and which is designed to analyse and evaluate the accesses (ZA) and to initiate defensive measures according to an analysis result and to a type of access.

7. Circuit arrangement according to claim 6, **characterised in that** the defence slave device (DS) is designed to send messages in the form of interrupt requests or specific reset requests or to disable specific functions of the integrated electronic circuit and to reset the integrated electronic circuit to a defined initial state as defensive measures.

8. Circuit arrangement according to one of claims 6 to 7, **characterised in that** the defence slave device (DS) is designed to respond to accesses (ZA) according to the particular type of access.

9. Circuit arrangement according to one of claims 6 to 8, **characterised in that** what is known as a network-on-chip bus system is used as the bus system (NoC).

## Revendications

1. Procédé de protection d'un circuit électronique intégré avec au moins une unité maître (M1 à Mn), au moins une unité esclave (S1 à Sn) et un système de bus (NoC) contre le balayage d'un espace d'adresses, des accès (ZA) de ladite au moins une unité maître (M1 à Mn) à ladite au moins unité esclave (S1 à Sn) étant effectués par l'intermédiaire du système de bus (NoC) au moyen d'une adresse provenant de l'espace d'adresses et l'espace d'adresses étant utilisé en fonction des fonctionnalités du circuit électronique intégré, **caractérisé en ce qu'**une unité esclave de défense (DS) est raccordée au système de bus (NoC) du circuit électronique intégré (1), **en ce que** des accès (ZA) à des adresses inutilisées de l'espace d'adresses sont transmis à l'unité esclave de défense (DS) (2), **en ce que** ces accès (ZA) sont analysés et évalués par l'unité esclave de défense (DS) (3), et **en ce qu'**en fonction d'un résultat d'analyse et d'un type d'accès des mesures de défense sont déclenchées par l'unité esclave de défense (DS) (4).

2. Procédé selon la revendication 1, **caractérisé en ce qu'**en vue d'une analyse des accès (ZA) par l'unité esclave de défense (DS), un certain nombre d'accès à des adresses inutilisées, un certain nombre d'accès dans un intervalle de temps prédéterminé et/ou des modèles d'accès (ZA) sont évalués (3).

3. Procédé selon l'une des revendications 1 à 2, **caractérisé en ce que** dans une opération de démarrage, sur la base du résultat d'analyse, l'unité esclave de défense (DS) remet le circuit électronique intégré dans un état initial défini (4), comme mesure de défense.

4. Procédé selon l'une des revendications 1 à 2, **caractérisé en ce qu'**en fonctionnement, sur la base du résultat d'analyse, l'unité esclave de défense (DS) envoie des messages sous forme de demandes d'interruption ou de demandes spécifiques de réinitialisation aux unités maître et/ou esclave (M1 à Mn, S1 à Sn) du circuit électronique intégré (4) ou désactive des fonctionnalités définies du circuit électronique intégré (4), comme mesures de défense.

5. Procédé selon l'une des revendications 1 à 4, **caractérisé en ce que**, comme mesure de défense, l'unité esclave de défense (DS) répond à des accès (ZA) en fonction du type d'accès en question (4).

6. Agencement de circuit (SA) pour la protection d'un circuit électronique intégré contre le balayage d'un espace d'adresses pour la mise en oeuvre du procédé selon l'invention selon les revendication 1 à 5, composé d'au moins une unité maître (M1 à Mn), d'au moins une unité esclave (S1 à Sn) et d'un système de bus (NoC) pour relier ladite au moins unité maître (Ml à Mn) et ladite au moins une unité esclave (S1 à Sn), **caractérisé en ce que**, en outre, une unité esclave de défense (DS) est raccordée au système de bus (NoC), à laquelle des accès (ZA) à des domaines d'adresses inutilisés de l'espace d'adresses peuvent être transmis et laquelle est configurée pour analyser et évaluer les accès (ZA) ainsi que pour déclencher des mesures de défense en fonction d'un résultat d'analyse et un type d'accès.

7. Agencement de circuit selon la revendication 6, **caractérisé en ce que** l'unité esclave de défense (DS) est configurée pour envoyer des messages sous forme de demandes d'interruption ou de demandes spécifiques de réinitialisation ou pour désactiver des fonctionnalités définies du circuit électronique intégré et pour remettre le circuit électronique intégré dans un état initial défini, comme mesures de défense.

8. Agencement de circuit selon l'une des revendications 6 à 7, **caractérisé en ce que** l'unité esclave de défense (DS) est configurée pour répondre à des accès (ZA) en fonction du type d'accès en question.

9. Agencement de circuit selon l'une des revendications 6 à 8, **caractérisé en ce que** l'on utilise comme système de bus (NoC) un système de bus appelé Network-on-Chip.
